# EUROPÄISCHE PATENTSCHRIFT

(11) **EP 4 025 795 B1**
(45) Veröffentlichungstag und Bekanntmachung des Hinweises auf die Patenterteilung: **26.07.2023**
(21) Anmeldenummer: 20774976.3
(22) Anmeldetag: 17.09.2020
(51) Int. Cl.: F16D 1/10, F16H 57/04

(54) **ANTRIEBSVORRICHTUNG FÜR EIN FAHRZEUG**
DRIVE DEVICE FOR A VEHICLE
DISPOSITIF D'ENTRAÎNEMENT POUR VÉHICULE

(30) Priorität: 02.12.2019 DE 102019132590
(43) Veröffentlichungstag der Anmeldung: 13.07.2022
(73) Patentinhaber: AUDI AG, 85045 Ingolstadt (DE)
(72) Erfinder: SCHÄFER, Markus, 80807 München (DE); LUX, Moritz, 80805 München (DE)
(74) Vertreter: Bierschneider, Walter
(86) Internationale Anmeldenummer: PCT/EP2020/076039
(87) Internationale Veröffentlichungsnummer: WO 2021/110298

(56) Entgegenhaltungen:
- DE-A1- 2 354 301
- DE-A1-102017 123 586
- JP-A- 2011 214 646
- US-A1- 2009 285 517
- US-A1- 2017 067 512
- US-A1- 2018 238 418

## Beschreibung

Die Erfindung betrifft eine Antriebsvorrichtung für ein Fahrzeug nach dem Oberbegriff des Anspruches 1 sowie ein Verfahren zur Herstellung einer Getriebe-Antriebswelle in einer solchen Antriebsvorrichtung nach Anspruch 8.

Bei einem elektrisch betriebenen, zweispurigen Fahrzeug kann beispielhaft eine elektrisch angetriebene Vorderachse eine Elektromaschine aufweisen. Diese kann gegebenenfalls achsparallel zu den, zu den Fahrzeugrädern geführten Flanschwellen angeordnet sein. In diesem Fall kann die Elektromaschine über eine einfache oder doppelte Stirnrad-Getriebestufe auf ein Vorderachsdifferenzial und weiter auf die zu den Fahrzeugrädern geführten Flanschwellen der Fahrzeug-Vorderachse abtreiben.

In einer beispielhaften Antriebsvorrichtung ist eine Rotorwelle einer Elektromaschine als Hohlwelle mit Innenverzahnung ausgebildet, in die eine dazu koaxiale Getriebe-Antriebswelle mit Außenverzahnung gesteckt ist, und zwar unter Bildung einer momentenübertragenden Passverzahnung. Die Rotorwelle ist unter Zwischenschaltung eines Rotorwellen-Drehlagers durch eine Lageröffnung des Elektromaschinen-Gehäuses nach außen geführt. Zudem ist der Außenverzahnung der Getriebe-Antriebswelle ein Zentriersitz zugeordnet, um eine Schiefstellung zwischen der Getriebe-Antriebswelle und der Rotorwelle zu vermeiden. Der Zentriersitz ist eine am Außenumfang der Getriebe-Antriebswelle umlaufende, glattzylindrische Fläche, die in enger Spielpassung mit dem Rotorwellen-Innenumfang in Anlage ist.

Im Stand der Technik ist der auf der Getriebe-Antriebswelle ausgebildete Zentriersitz in der Axialrichtung über eine Hebelarmlänge von dem Rotorwellen-Drehlager beabstandet. Es hat sich gezeigt, dass im Fahrbetrieb bei rotierender sowie radial belasteter Getriebe-Antriebswelle speziell aufgrund der oben erwähnten Hebelarmlänge sich eine Wellen-Durchbiegung einstellt. Eine solche Wellen-Durchbiegung kann zu einer übermäßig großen Belastung des Rotorwellen-Drehlagers, zu einer Geräuschentwicklung und zu einer Reduzierung der Standzeit des Rotorwellen-Drehlagers führen.

Aus der DE 23 54 301 A1 ist ein Antrieb eines schienengebundenen elektrischen Triebfahrzeugs bekannt. Aus der EP 1 433 975 B1 ist eine Kraftübertragungsvorrichtung bekannt. Aus der DE 10 2010 050 217 A1 ist eine elektrische Achse für ein Kraftfahrzeug bekannt. Aus der US 2007/0131475 A1 ist eine elektrische Lenkvorrichtung bekannt. Die US 2017/067512 A1 offenbart eine gattungsgemäße Kraftübertragungsvorrichtung für ein Fahrzeug. Aus der US 2019/0006923 A1 ist eine elektrische Antriebseinheit bekannt.

Die Aufgabe der Erfindung besteht darin, eine Antriebsvorrichtung für ein Fahrzeug bereitzustellen, bei der die Getriebe-Antriebswelle im Vergleich zum Stand der Technik in konstruktiv einfacher Weise im Fahrbetrieb mit verbesserter Laufruhe rotiert.

Die Aufgabe ist durch die Merkmale des Anspruches 1 und 8 gelöst. Bevorzugte Weiterbildungen der Erfindung sind in den Unteransprüchen offenbart.

Die Erfindung beruht auf dem Sachverhalt, dass sich eine Wellen-Durchbiegung der Getriebe-Antriebswelle im Stand der Technik vorrangig aufgrund einer Hebelarmlänge zwischen dem Rotorwellen-Drehlager und dem auf der Getriebe-Antriebswelle ausgebildeten Zentriersitz einstellt. Vor diesem Hintergrund ist gemäß dem Anspruch 1 zur Reduzierung der Biegebeanspruchung der Getriebe-Antriebswelle deren Zentriersitz ohne Axialversatz (das heißt ohne Hebelarmlänge) zum Rotorwellen-Drehlager in Axialflucht zum Rotorwellen-Drehlager angeordnet. Erfindungsgemäß ist also die Hebelarmlänge zwischen dem Zentriersitz der Getriebe-Antriebswelle und dem Rotorwellen-Drehlager auf null reduziert, wodurch Radialkräfte in direkter Krafteinleitung (das heißt ohne Biegebeanspruchung) von der Getriebe-Antriebswelle über deren Zentriersitz in das Rotorwellen-Drehlager einleitbar sind. Erfindungsgemäß wird insbesondere die Durchbiegung der Rotorwelle im Überlappungsbereich der beiden Wellen begrenzt.

Zur weiteren Reduzierung der Wellen-Biegebeanspruchung ist es besonders bevorzugt, wenn das Rotorwellen-Drehlager nicht als ein Festlager, sondern vielmehr als ein axial verschiebbares, insbesondere federvorgespanntes Loslager realisiert ist. Die Reduzierung der Durchbiegung funktioniert auch, wenn an Stelle des Loslagers ein Festlager sitzt. Die Federvorspannung ist zur jederzeitigen definierten Belastung der Wälzkörper, damit kein lastloser Zustand entsteht, was die Laufruhe reduzieren würde.

In einer technischen Umsetzung kann die auf der Getriebe-Antriebswelle ausgebildete Außenverzahnung über einen Axialversatz versetzt zum Drehlager angeordnet sein. Die Getriebe-Antriebswelle ragt erfindungsgemäß mit ihrer elektromaschinenseitigen Wellen-Stirnseite in die Rotorwelle ein. Erfindungsgemäß schließt der Zentriersitz unmittelbar an der elektromaschinenseitigen Wellen-Stirnseite ab. Auf diese Weise wird ein möglichst großer Axialabstand zwischen dem Zentriersitz und einem später beschriebenen Lagersitz der Getriebe-Antriebswelle erzielt, was die Durchbiegung der Rotorwelle begrenzt, und zwar im Überlappungsbereich der beiden Wellen. Der unmittelbar an der elektromaschinenseitigen Wellen-Stirnseite angeordnete Zentriersitz geht erfindungsgemäß in Richtung auf eine getriebeseitige Wellen-Stirnseite zunächst in einen durchmesserreduzierten Wellenabschnitt über sowie im weiteren Axialverlauf in die durchmessergrößere Außenverzahnung über.

Die Getriebe-Antriebswelle ist in einer technischen Realisierung unter Zwischenschaltung eines Getriebe-Drehlagers (insbesondere ein Festlager) in einem Getriebegehäuse drehgelagert. Das Getriebegehäuse-Drehlager sitzt auf einem entsprechenden Lagersitz der Getriebe-Antriebswelle. Bevorzugt ist der Lagersitz der Getriebe-Antriebswelle unmittelbar an der getriebeseitigen Wellen-Stirnseite angeordnet, wodurch ein möglichst großer axialer Lagerabstand zwischen dem Lagersitz und dem Zentriersitz der Getriebe-Antriebswelle bereitgestellt ist.

Bevorzugt bilden die Getriebe-Antriebswelle und die Rotorwelle einen Wellenverbund, der insgesamt in einer Drei-Punkt-Lagerung in der Antriebsvorrichtung drehgelagert ist. Die Drei-Punkt-Lagerung umfasst bevorzugt an den beiden Wellenverbund-Stirnseiten jeweils Lagerstellen, an denen der Wellenverbund über ein Festlager am Elektromaschinen-Gehäuse und am Getriebe-Gehäuse drehgelagert ist, während in der Wellenverbund-Mitte das Rotorwellen-Drehlager als ein mittleres Loslager positioniert ist. Eine solche Drei-Punkt-Lagerung ist im Vergleich zu herkömmlichen Vier-Punkt-Lagerungen mit wesentlich geringeren Kosten sowie reduziertem Fertigungsaufwand verbunden.

In einer besonders bevorzugten Ausführungsvariante ist die Rotorwelle Bestandteil einer Rotorinnenkühlung, bei der in den Hohlraum der Rotorwelle eine rohrförmige Öllanze einragt. Die Öllanze kann zusammen mit dem Rotorwellen-Innenumfang einen Ringspalt begrenzen. Im Fahrbetrieb kann ein Schmier- und/oder Kühlmittel-Volumenstrom über eine Druckpumpe durch die Öllanze an einer Überströmöffnung in den Ringspalt geführt werden. Von dort kann der Schmier- und/oder Kühlmittel-Volumenstrom weiter in Richtung auf den Zentriersitz der Getriebe-Antriebswelle geführt werden. In diesem Fall kann der Zentriersitz der Getriebe-Antriebswelle einen axialen Strömungsdurchlass aufweisen. Der durchmesserreduzierte Wellenabschnitt der Getriebe-Antriebswelle kann zusammen mit dem Rotorwellen-Innenumfang eine axiale Strömungsnut begrenzen. Auf diese Weise kann der Ringspalt über den Zentriersitz-Strömungsdurchlass sowie über die axiale Strömungsnut mit der Passverzahnung in strömungstechnischer Verbindung sein. Die Passverzahnung kann aufgrund von Verzahnungsspiel mit einem geringen Schmier- und/oder Kühlmittel-Volumenstrom durchströmt werden, um einen Abtransport von Passungsrost-Partikeln zu gewährleisten.

Die Getriebe-Antriebswelle kann bevorzugt als eine Hohlwelle ausgeführt sein. Zur Herstellung der Getriebe-Antriebswelle kann zunächst ein Wellen-Rohling aus einem härtbaren Stahl bereitgestellt werden. Im Wellen-Rohling können sowohl der Zentriersitz als auch der Lagersitz bereits ausgebildet sein. Anschließend erfolgt ein Wärmebehandlungsschritt, bei dem der Wellen-Rohling gehärtet wird, und zwar unter Bauteilverzug mit entsprechender Wellen-Durchbiegung. Um den Bauteilverzug zu minimieren, erfolgt ein Ausricht-Prozessschritt, bei dem der gehärtete Wellen-Rohling mittels Spannwerkzeugen an zwei axial voneinander beabstandeten Einspannstellen eingespannt wird. Im eingespannten Zustand wird der Wellen-Rohling mit einer Prozesskraft plastisch verformt, um den Bauteilverzug zu reduzieren. Die Prozesskraft greift zwischen den beiden axial voneinander beabstandeten Einspannstellen an.

Im Hinblick auf eine einwandfreie Ausrichtung des Wellen-Rohlings ist es bevorzugt, wenn die beiden voneinander axial beabstandeten Einspannstellen über einen möglichst großen Axialabstand voneinander beabstandet sind. Vor diesem Hintergrund ist es besonders bevorzugt, wenn die beiden Einspannstellen die jeweils an den Wellen-Stirnseiten der Getriebe-Antriebswelle ausgebildeten Lager- und Zentriersitze sind.

Nachfolgend ist ein Ausführungsbeispiel der Erfindung anhand der beigefügten Figuren beschrieben.

Es zeigen:
- Figur 1: eine Getriebestruktur einer Antriebsvorrichtung;
- Figur 2: in einer Halbschnitt-Teilansicht einen Wellenverbund aus Getriebe-Antriebswelle und Rotorwelle gemäß einer nicht von der Erfindung umfassten Vergleichsform;
- Figur 3: eine Ansicht entsprechend der Figur 1;
- Figur 4: eine Ausricht-Station, in der eine Getriebe-Antriebswelle gemäß einer nicht von der Erfindung umfassten Vergleichsform eingespannt ist; und
- Figur 5: eine Ansicht entsprechend der Figur 4 gemäß der Erfindung.

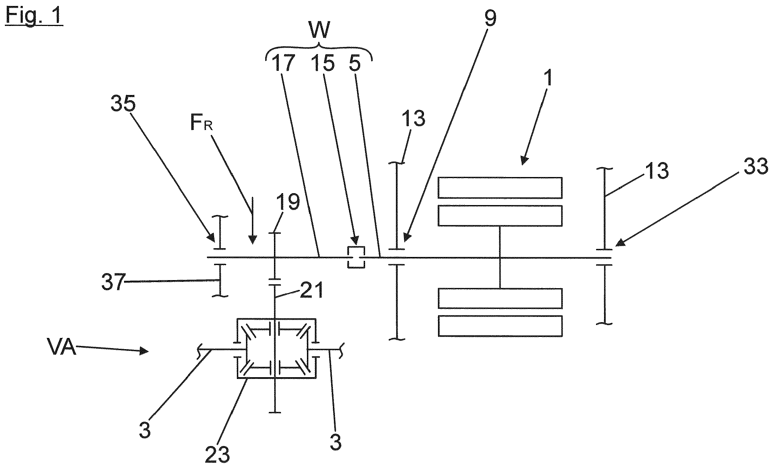

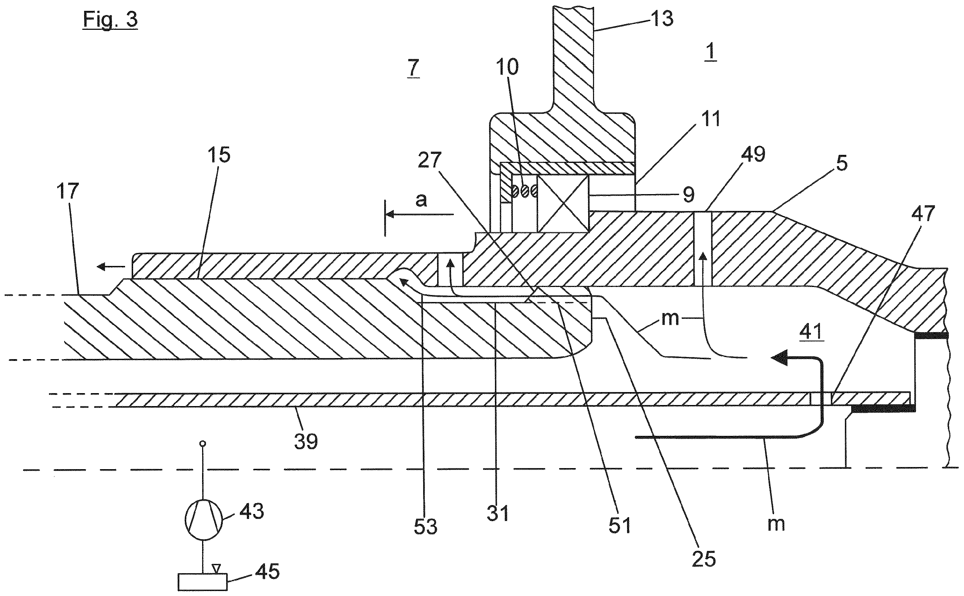

In der Figur 1 ist eine Antriebsvorrichtung gezeigt, mittels der Vorderachse VA eines zweispurigen Fahrzeugs antreibbar ist. Die Vorderachse VA weist eine Elektromaschine 1 auf, die achsparallel zu den, zu den Fahrzeugrädern geführten Flanschwellen 3 angeordnet ist. Die Rotorwelle 5 der Elektromaschine 1 ist über ein Getriebe 7 (Figur 3) in trieblicher Verbindung mit den beiden Flanschwellen 3. Die Rotorwelle 5 ist unter Zwischenschaltung eines Rotorwellen-Drehlagers 9 (Figur 1 oder 3) aus einer Lageröffnung 11 eines Elektromaschinen-Gehäuses 13 nach außen geführt und über eine momentenübertragende Passverzahnung 15 an einer koaxial angeordneten Getriebe-Antriebswelle 17 angebunden. Auf der Getriebe-Antriebswelle 17 ist ein Festzahnrad 19 einer Zahnradstufe St1 des Getriebes 7 angeordnet, das mit einem eingangsseitigen Zahnrad 21 eines Achsdifferenzials 23 kämmt. Das Achsdifferenzial 23 treibt beidseitig auf die zu den Fahrzeugrädern geführten Flanschwellen 3 ab.

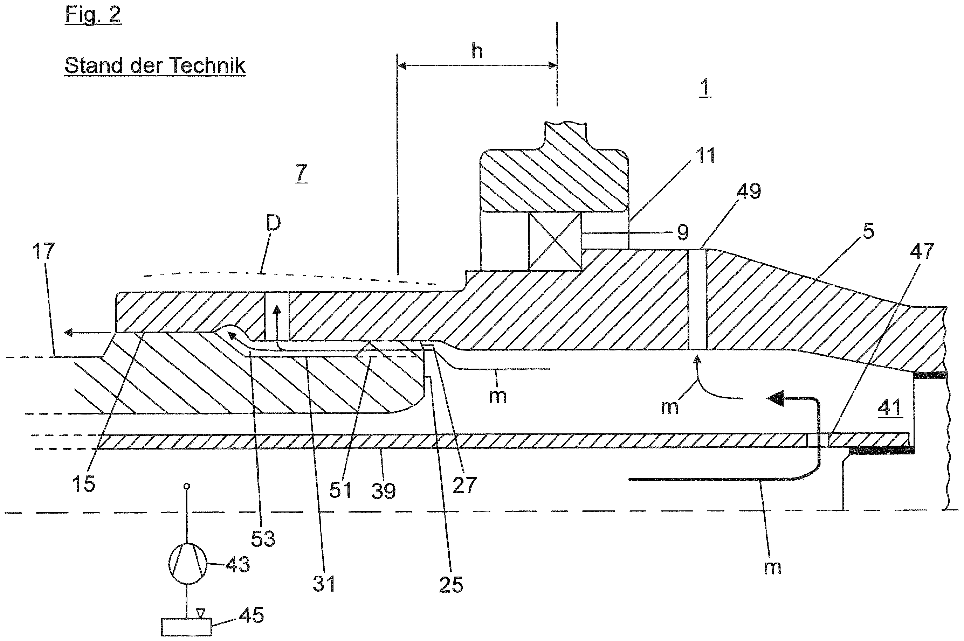

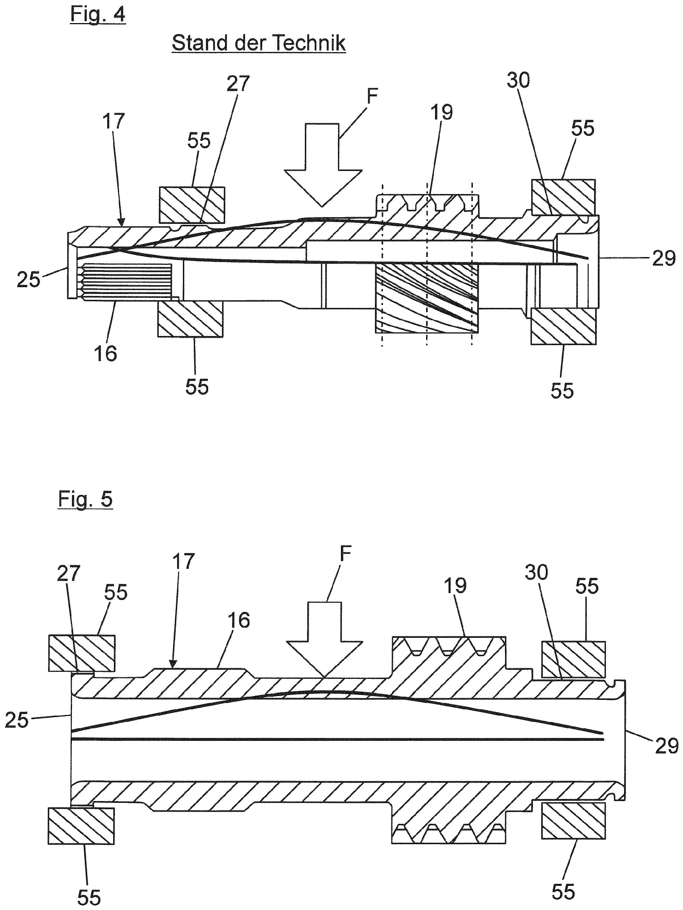

Im Hinblick auf ein einfaches Verständnis der Erfindung wird zunächst ein nicht von der Erfindung umfasster Wellenverbund gemäß der Figur 2 beschrieben. Demzufolge ist die Rotorwelle 5 als eine Hohlwelle mit Innenverzahnung ausgebildet, in die die dazu koaxiale Getriebe-Antriebswelle 17 mit Außenverzahnung 16 (Figur 4 oder 5) gesteckt ist, wodurch sich die Passverzahnung 19 ergibt. Gemäß der Figur 2 ragt die Getriebe-Antriebswelle 17 mit ihrer elektromaschinenseitigen Wellen-Stirnseite 25 in die Rotorwelle 5 ein. Unmittelbar an der elektromaschinenseitigen Wellen-Stirnseite 25 schließt ein Zentriersitz 27 ab, der eine umlaufende, glattzylindrische Oberfläche aufweist, die in enger Spielpassung mit dem ebenfalls glattzylindrischen Rotorwellen-Innenumfang ist.

Der Zentriersitz 27 geht in Richtung auf eine getriebeseitige Wellen-Stirnseite 29 (Figur 4 oder 5) in einen durchmesserreduzierten Wellenabschnitt 31 über, an dem sich im weiteren Axialverlauf die durchmessergrößere Außenverzahnung 16 anschließt. In der in der Figur 2 gezeigten Vergleichsform ist der auf der Getriebe-Antriebswelle 17 ausgebildete Zentriersitz 27 über eine Hebelarmlänge h von dem Rotorwellen-Drehlager 9 beabstandet. Es hat sich gezeigt, dass im Fahrbetrieb bei rotierender Getriebe-Antriebswelle 17 sowie bei Einwirkung einer Radialkraft F_{R} auf die Getriebe-Antriebswelle 17 aufgrund der Hebelarmlänge h sich eine Wellen-Durchbiegung D (Figur 2) einstellt, die zu einer übermäßig großen Belastung des Rotorwellen-Drehlagers 9 führt sowie zu einer Geräuschentwicklung führt.

Vor diesem Hintergrund sind in der Figur 3 zur Reduzierung einer Wellen-Durchbiegung D die folgenden Maßnahmen getroffen: Im Unterschied zur Figur 2 ist in der Figur 3 der Zentriersitz 27 der Getriebe-Antriebswelle 17 nicht mehr über eine Hebelarmlänge h von dem Rotorwellen-Drehlager 9 beabstandet, sondern vielmehr ohne Axialversatz sowie in Axialflucht zum Rotorwellen-Drehlager 9 angeordnet. Dadurch reduziert sich die Biegebeanspruchung der Getriebe-Antriebswelle 17. Zusätzlich ist das Rotorwellen-Drehlager 9 als ein axial verschiebbares federvorgespanntes Loslager realisiert.

Die Getriebe-Antriebswelle 17 und die Rotorwelle 5 bilden einen Wellenverbund W (Figur 1), der in einer konstruktiv einfachen Drei-Punkt-Lagerung in der Antriebsvorrichtung drehgelagert ist, und zwar an den beiden Wellenverbund-Stirnseiten jeweils über ein Festlager 33 am Elektromaschinen-Gehäuse und über ein weiteres Festlager 35 am Getriebe-Gehäuse 37. In der Wellenverbund-Mitte befindet sich das als Loslager realisierte Rotorwellen-Drehlager 9.

Wie aus der Figur 3 weiter hervorgeht, ragt in den Hohlraum der Rotorwelle 5 eine rohrförmige Öllanze 39 ein, die Bestandteil einer Rotorinnenkühlung ist. Die Öllanze 39 begrenzt zusammen mit dem Rotorwellen-Innenumfang einen Ringspalt 41. Bei aktivierter Rotorinnenkühlung fördert eine Druckpumpe 43 einen Schmier- und/oder Kühlmittel-Volumenstrom m von einem Pumpensumpf 45 durch die Öllanze 39 und über deren Überströmöffnung 47 in den Ringspalt 41. Ausgehend vom Ringspalt 41 wird der Schmier- und/oder Kühlmittel-Volumenstrom m über eine Auslassöffnung 49 der Rotorwelle 5 in den Elektromaschinen-Innenraum gefördert. Außerdem wird der Schmier- und/oder Kühlmittel-Volumenstrom m über einen im Zentriersitz 27 ausgebildeten Strömungsdurchlass 51 sowie über eine axiale Strömungsnut 53 bis zur Passverzahnung 15 gefördert. Die axiale Strömungsnut 53 ist zwischen dem durchmesserreduzierten Wellenabschnitt 31 und dem Rotorwellen-Innenumfang begrenzt.

Nachfolgend wird anhand der Figur 4 und 5 eine Prozessabfolge zur Herstellung der Getriebe-Antriebswelle 17 beschrieben: Demzufolge wird zunächst ein Wellen-Rohling 57 aus einem härtbaren Stahl bereitgestellt. Der Wellen-Rohling 57 weist sowohl den Zentriersitz 27 als auch den Lagersitz 30 auf. Der Lagersitz 30 ist in der Figur 4 und 5 unmittelbar an der getriebeseitigen Wellen-Stirnseite 29 der Getriebe-Antriebswelle 17 angeordnet.

Der Wellen-Rohling 57 wird anschließend in einem Wärmebehandlungsschritt gehärtet, und zwar unter Bauteilverzug, wodurch sich eine Wellen-Durchbiegung D ergibt. Die Wellen-Durchbiegung D ist in der Figur 4 und 5 mittels Biegelinien angedeutet. In einem nachfolgenden Ausricht-Schritt wird der Wellen-Rohling 57 mittels Spannwerkzeuge 55 an zwei axial voneinander beabstandeten Einspannstellen eingespannt und mit einer Prozesskraft F plastisch verformt, bis sich der Bauteilverzug reduziert. Je größer der Abstand zwischen den beiden Einspannstellen ist, desto einfacher lässt sich der Bauteilverzug (und die damit einhergehende Wellen-Durchbiegung) reduzieren. Vor diesem Hintergrund sind in der Figur 5 die beiden Einspannstellen jeweils die an den Wellen-Stirnseiten 25, 29 ausgebildeten Lager- und Zentriersitze 27, 30. Auf diese Weise sind in der Figur 5 die beiden Einspannstellen über einen größtmöglichen Axialabstand voneinander beabstandet.

Demgegenüber ist in der, in der Figur 5 gezeigten Vergleichsform der Zentriersitz 27 der Getriebe-Antriebswelle 17 nicht unmittelbar an der elektromaschinenseitigen Wellen-Stirnseite 25 ausgebildet, sondern vielmehr um einen Achsversatz a versetzt davon positioniert. Auf diese Weise ragt die elektromaschinenseitige Wellen-Stirnseite 25 mit einem Überstand über die (in der Figur 5 linke) Einspannstelle hinaus, wodurch auch nach Durchführung des Ausricht-Schrittes ein Bauteilverzug in der Getriebe-Antriebswelle 17 verbleibt.

### BEZUGSZEICHENLISTE:

- 1: Elektromaschine
- 3: Flanschwellen
- 5: Rotorwelle
- 7: Getriebe
- St1: Zahnradstufe
- 9: Rotorwellen-Drehlager
- 10: Vorspannfeder
- 11: Lageröffnung
- 13: Elektromaschinen-Gehäuse
- 15: Passverzahnung
- 17: Getriebe-Antriebswelle
- 19: Festzahnrad
- 21: eingangsseitiges Zahnrad
- 23: Achsdifferenzial
- 25: elektromaschinenseitige Wellen-Stirnseite
- 27: Zentriersitz
- 29: getriebeseitige Wellen-Stirnseite
- 30: Lagersitz
- 31: durchmesserreduzierter Wellenabschnitt
- 33: Festlager
- 35: Festlager
- 37: Getriebegehäuse
- 39: Öllanze
- 41: Ringspalt
- 43: Druckpumpe
- 45: Pumpensumpf
- 47: Überströmöffnung
- 49: Auslassöffnung
- 51: Zentriersitz-Strömungsdurchlass
- 53: axiale Strömungsnut
- 55: Spannwerkzeug
- 57: Wellenrohling
- D: Wellen-Durchbiegung
- W: Wellenverbund
- h: Hebelarmlänge
- a: Axialversatz
- F: Prozesskraft
- F_{R}: Radialkraft
- m: Kühlmittel-Volumenstrom

## Patentansprüche

1. Antriebsvorrichtung für ein Fahrzeug, mit einer Getriebe-Antriebswelle (17) und mit einer Elektromaschine (1) mit einer Rotorwelle (5), wobei die Rotorwelle (5) als Hohlwelle mit Innenverzahnung ausgebildet ist, in die die dazu koaxiale Getriebe-Antriebswelle (17) mit Außenverzahnung (16) gesteckt ist, und zwar unter Bildung einer momentenübertragenden Passverzahnung (15), wobei die Rotorwelle (5) unter Zwischenschaltung eines Rotorwellen-Drehlagers (9) durch eine Lageröffnung (11) eines Elektromaschinen-Gehäuses (13) nach außen geführt ist, wobei die Getriebe-Antriebswelle (17) einen Zentriersitz (27) aufweist, der in Spielpassung mit dem Innenumfang der Rotorwelle (5) in Anlage ist, wobei die Getriebe-Antriebswelle (17) im Fahrbetrieb aufgrund von radial einwirkenden Betriebs-Kräften (F_{R}) auf Biegung (D) beansprucht ist, **dadurch gekennzeichnet, dass** zur Reduzierung der Biegebeanspruchung (D) der Zentriersitz (27) der Getriebe-Antriebswelle (17) ohne Axialversatz zum Rotorwellen-Drehlager (9) in Axialflucht zum Rotorwellen-Drehlager (9) angeordnet ist, dass die Getriebe-Antriebswelle (17) mit ihrer elektromaschinenseitigen Wellen-Stirnseite (25) in die Rotorwelle (5) einragt, und dass der Zentriersitz (27) unmittelbar, das heißt ohne Zwischenlage der Außenverzahnung (16), an der elektromaschinenseitigen Wellen-Stirnseite (25) abschließt, und dass der Zentriersitz (27) in Richtung auf eine getriebeseitige Wellen-Stirnseite (29) in einen durchmesserreduzierten Wellenabschnitt (31) übergeht sowie im weiteren Axialverlauf in die durchmessergrößere Außenverzahnung (16) übergeht.

2. Antriebsvorrichtung nach Anspruch 1, **dadurch gekennzeichnet, dass** zur weiteren Reduzierung der Wellen-Biegebeanspruchung das Rotorwellen-Drehlager (9) als ein axial verschiebbares, federvorgespanntes Loslager realisiert ist.

3. Antriebsvorrichtung nach Anspruch 1 oder 2, **dadurch gekennzeichnet, dass** die auf der Getriebe-Antriebswelle (17) ausgebildete Außenverzahnung (16) über einen Axialversatz (a) versetzt zum Rotorwellen-Drehlager (9) angeordnet ist.

4. Antriebsvorrichtung nach einem der vorhergehenden Ansprüche, **dadurch gekennzeichnet, dass** die Getriebe-Antriebswelle (17) unter Zwischenschaltung eines Getriebe-Drehlagers (35), und zwar eines Festlagers, in einem Getriebegehäuse (37) drehgelagert ist, und dass ein dem Getriebe-Drehlager (35) zugeordneter Lagersitz (30) der Getriebe-Antriebswelle (17) unmittelbar, das heißt ohne Zwischenlage einer Verzahnung oder eines anderen Funktionsabschnittes, an der getriebeseitigen Wellen-Stirnseite (29) abschließt.

5. Antriebsvorrichtung nach einem der vorhergehenden Ansprüche, **dadurch gekennzeichnet, dass** in den Hohlraum der Rotorwelle (5) eine rohrförmige Öllanze (39) einragt, die Bestandteil einer Rotorinnenkühlung ist, und dass die Öllanze (39) zusammen mit dem Rotorwellen-Innenumfang einen Ringspalt (41) begrenzt, und dass ein Schmier- und/oder Kühlmittel-Volumenstrom (m) durch die Öllanze (39) über eine Überströmöffnung (47) in den Ringspalt (41) führbar ist.

6. Antriebsvorrichtung nach Anspruch 5, **dadurch gekennzeichnet, dass** im Zentriersitz (27) der Getriebe-Antriebswelle (17) ein axialer Strömungsdurchlass (51) ausgebildet ist, und dass der durchmesserreduzierte Wellenabschnitt (31) der Getriebe-Antriebswelle (17) zusammen mit dem Rotorwellen-Innenumfang eine axiale Strömungsnut (53) begrenzt, so dass der Ringspalt (41) über den, am Zentriersitz (27) ausgebildeten Strömungsdurchlass (51) sowie über die axiale Strömungsnut (53) mit der Passverzahnung (15) in strömungstechnischer Verbindung ist.

7. Antriebsvorrichtung nach einem der vorhergehenden Ansprüche, **dadurch gekennzeichnet, dass** die Getriebe-Antriebswelle (17) und die Rotorwelle (5) einen Wellenverbund bilden, der in einer Drei-Punkt-Lagerung in der Antriebsvorrichtung drehgelagert ist, und zwar an den Wellenverbund-Stirnseiten (25, 29) jeweils über ein Festlager (33, 35) am Elektromaschinen-Gehäuse (13) und am Getriebe-Gehäuse (37) sowie in der Wellenverbund-Mitte über ein mittleres Loslager (9).

8. Verfahren zur Herstellung einer Getriebe-Antriebswelle (17) für eine Antriebsvorrichtung nach einem der vorhergehenden Ansprüche, bei dem ein Wellen-Rohling (57) aus einem härtbaren Stahl bereitgestellt wird, in dem sowohl der Zentriersitz (27) und der Lagersitz (30) ausgebildet sind, wobei in einem Wärmebehandlungsschritt der Wellen-Rohling (57) gehärtet wird, und zwar unter Bauteilverzug mit Wellen-Durchbiegung, und in einem nachfolgenden Ausricht-Schritt der gehärtete Wellen-Rohling (57) mittels Spannwerkzeuge (55) an zwei axial voneinander beabstandeten Einspannstellen eingespannt wird und mit einer Prozesskraft (F) plastisch verformt wird zur Reduzierung des Bauteilverzugs.

## Claims

1. Drive device for a vehicle, having a transmission drive shaft (17) and having an electric machine (1) with a rotor shaft (5), wherein the rotor shaft (5) is designed as a hollow shaft with internal toothing, into which the transmission drive shaft (17) that is coaxial therewith and has external toothing (16) is inserted, specifically forming a torque-transmitting spline (15), wherein the rotor shaft (5) is led to the outside through a bearing opening (11) of an electric machine housing (13) with the interposition of a rotor shaft rotary bearing (9), wherein the transmission drive shaft (17) has a centring seat (27), which is in contact with a clearance fit with the internal circumference of the rotor shaft (5), wherein, during driving operation, the transmission drive shaft (17) is subjected to bending stress (D) on account of radially acting operating forces (F_{R}), **characterized in that** to reduce the bending stress (D), the centring seat (27) of the transmission drive shaft (17) is arranged to be axially flush with the rotor shaft rotary bearing (9) without any axial offset relative to the rotor shaft rotary bearing (9), **in that** the transmission drive shaft (17) projects into the rotor shaft (5) with its shaft end face (25) on the electric machine side, and **in that** the centring seat (27) adjoins the shaft end face (25) on the electric machine side directly, which means without the interposition of the external toothing (16), and **in that** the centring seat (27) merges in the direction of a shaft end face (29) on the transmission side into a reduced-diameter shaft section (31) and, in the further axial course, into the larger-diameter external toothing (16).

2. Drive device according to Claim 1, **characterized in that** to reduce the shaft bending stress further, the rotor shaft rotary bearing (9) is implemented as an axially displaceable, spring pre-loaded floating bearing.

3. Drive device according to Claim 1 or 2, **characterized in that** the external toothing (16) formed on the transmission drive shaft (17) is arranged to be offset relative to the rotor shaft rotary bearing (9) by an axial offset (a).

4. Drive device according to one of the preceding claims, **characterized in that** the transmission drive shaft (17) is rotationally mounted in a transmission housing (37) with the interposition of a transmission rotary bearing (35), specifically a fixed bearing, and **in that** a bearing seat (30) of the transmission drive shaft (17) that is associated with the transmission rotary bearing (35) adjoins the shaft end face (29) on the transmission side directly, which means without the interposition of a toothing or any other functional section.

5. Drive device according to one of the preceding claims, **characterized in that** a tubular oil lance (39), which is a constituent part of a rotor internal cooling system, projects into the hollow space of the rotor shaft (5), and **in that** the oil lance (39), together with the rotor shaft internal circumference, delimits an annular gap (41), and **in that** a lubricant and/or coolant volume flow (m) through the oil lance (39) can be guided into the annular gap (41) via an overflow opening (47).

6. Drive device according to Claim 5, **characterized in that** an axial flow passage (51) is formed in the centring seat (27) of the transmission drive shaft (17), and **in that** the reduced-diameter shaft section (31) of the transmission drive shaft (17), together with the rotor shaft inner circumference, delimits an axial flow groove (53), so that the annular gap (41) has a flow connection to the spline (15) via the flow passage (51) formed in the centring seat (27) and via the axial flow groove (53).

7. Drive device according to one of the preceding claims, **characterized in that** the transmission drive shaft (17) and the rotor shaft (5) form a shaft assembly which is rotationally mounted in a three-point bearing in the drive device, specifically at the shaft assembly end faces (25, 29), in each case via a fixed bearing (33, 35) on the electric machine housing (13) and on the transmission housing (37) and in the shaft assembly centre via a central floating bearing (9).

8. Method for producing a transmission drive shaft (17) for a drive device according to one of the preceding claims, in which a shaft blank (57) made of a hardenable steel is provided, in which both the centring seat (27) and the bearing seat (30) are formed, wherein the shaft blank (57) is hardened in a thermal treatment step, specifically with component distortion with shaft deflection and, in a subsequent alignment step, the hardened shaft blank (57) is clamped by means of clamping tools (55) at two clamping points that are spaced apart axially from each other and is deformed plastically with a process force (F) to reduce the component distortion.

## Revendications

1. Dispositif d'entraînement pour un véhicule, comportant un arbre d'entraînement de transmission (17) et comportant une machine électrique (1) comportant un arbre de rotor (5), l'arbre de rotor (5) étant formé sous forme d'arbre creux comportant une denture intérieure, dans lequel est inséré l'arbre d'entraînement de transmission (17) coaxial à celui-ci et comportant une denture extérieure (16), et ce en formant une cannelure (15) transmettant les couples, l'arbre de rotor (5) étant guidé vers l'extérieur à travers une ouverture de palier (11) d'un boîtier de machine électrique (13) avec interposition d'un palier rotatif d'arbre de rotor (9), l'arbre d'entraînement de transmission (17) présentant un siège de centrage (27) qui est en appui avec la périphérie intérieure de l'arbre de rotor (5) dans un ajustement avec jeu, l'arbre d'entraînement de transmission (17) étant sollicité en flexion (D) pendant le fonctionnement de conduite en raison de forces de fonctionnement (F_{R}) agissant radialement, **caractérisé en ce que**, pour réduire la sollicitation en flexion (D), le siège de centrage (27) de l'arbre d'entraînement de transmission (17) est disposé en alignement axial par rapport au palier rotatif d'arbre de rotor (9) sans décalage axial par rapport au palier rotatif d'arbre de rotor (9), **en ce que** l'arbre d'entraînement de transmission (17) pénètre, par son côté frontal d'arbre (25) côté machine électrique, dans l'arbre de rotor (5), et **en ce que** le siège de centrage (27) se termine directement, c'est-à-dire sans interposition de la denture extérieure (16), au niveau du côté frontal d'arbre (25) côté machine électrique, et **en ce que** le siège de centrage (27) se prolonge, en direction d'un côté frontal d'arbre (29) côté transmission, dans une partie d'arbre (31) de diamètre réduit et se prolonge dans la denture extérieure (16) de plus grand diamètre dans l'autre profil axial.

2. Dispositif d'entraînement selon la revendication 1, **caractérisé en ce que**, pour réduire davantage la sollicitation en flexion de l'arbre, le palier rotatif d'arbre de rotor (9) est réalisé sous la forme d'un palier libre mobile axialement et précontraint par ressort.

3. Dispositif d'entraînement selon la revendication 1 ou 2, **caractérisé en ce que** la denture extérieure (16) formée sur l'arbre d'entraînement de transmission (17) est disposée de manière décalée d'un décalage axial (a) par rapport au palier rotatif d'arbre de rotor (9).

4. Dispositif d'entraînement selon l'une des revendications précédentes, **caractérisé en ce que** l'arbre d'entraînement de transmission (17) est monté rotatif dans un carter de transmission (37) avec interposition d'un palier rotatif de transmission (35), à savoir d'un palier fixe, et **en ce qu'**un siège de palier (30), associé au palier rotatif de transmission (35), de l'arbre d'entraînement de transmission (17) se termine directement, c'est-à-dire sans interposition d'une denture ou d'une autre partie fonctionnelle, au niveau du côté frontal d'arbre (29) côté transmission.

5. Dispositif d'entraînement selon l'une des revendications précédentes, **caractérisé en ce qu'**une lance à huile tubulaire (39) pénètre dans l'espace creux de l'arbre de rotor (5), laquelle fait partie d'un refroidissement interne de rotor, et **en ce que** la lance à huile (39) délimite, conjointement avec la périphérie interne d'arbre de rotor, un interstice annulaire (41), et **en ce qu'**un débit volumique de lubrifiant et/ou de réfrigérant (m) peut être guidé à travers la lance à huile (39) via une ouverture de trop-plein (47) dans l'interstice annulaire (41).

6. Dispositif d'entraînement selon la revendication 5, **caractérisé en ce qu'**un passage d'écoulement axial (51) est formé dans le siège de centrage (27) de l'arbre d'entraînement de transmission (17), et **en ce que** la partie d'arbre (31) de diamètre réduit de l'arbre d'entraînement de transmission (17) délimite, conjointement avec la périphérie interne d'arbre de rotor, une rainure d'écoulement axiale (53), de telle sorte que l'interstice annulaire (41) soit en liaison fluidique avec la cannelure (15) via le passage d'écoulement (51) formé au niveau du siège de centrage (27) ainsi que via la rainure d'écoulement axiale (53).

7. Dispositif d'entraînement selon l'une des revendications précédentes, **caractérisé en ce que** l'arbre d'entraînement de transmission (17) et l'arbre de rotor (5) forment un ensemble d'arbres qui est monté rotatif dans le dispositif d'entraînement dans un support à trois points, et ce au niveau des côtés frontaux d'ensemble d'arbres (25, 29) respectivement par le biais d'un palier fixe (33, 35) au niveau du carter de machine électrique (13) et au niveau du carter de transmission (37) ainsi qu'au centre de l'ensemble d'arbres par le biais d'un palier libre central (9).

8. Procédé de fabrication d'un arbre d'entraînement de transmission (17) pour un dispositif d'entraînement selon l'une des revendications précédentes, dans lequel une ébauche d'arbre (57) est produite à partir d'un acier trempant, ébauche dans laquelle à la fois le siège de centrage (27) et le siège de palier (30) sont formés, l'ébauche d'arbre (57) étant trempée dans une étape de traitement thermique, et ce avec distorsion de composants par flexion d'arbre, et, dans une étape d'orientation suivante, l'ébauche d'arbre trempée (57) est serrée au moyen d'outils de serrage (55) au niveau de deux points de serrage espacés axialement l'un de l'autre et est déformée plastiquement par une force de processus (F) pour la réduction de la distorsion des composants.
